# EUROPEAN PATENT APPLICATION

(11) **EP 4 624 076 A1**
(43) Date of publication of application: **01.10.2025**
(21) Application number: 24167458.9
(22) Date of filing: 28.03.2024
(51) Int. Cl.: B22F 10/64, B22F 1/12, B22F 5/00, B22F 10/28, B33Y 10/00, B33Y 70/10, C22C 33/02

(54) **GRAPHITE-BASED STEEL ALLOY**

(71) Applicant: Université de Liège, 4000 Liège (BE)
(72) Inventor: SAGGIONETTO, Enrico, 35010 Villanova di Camposampiero (IT); TCHUINDJANG, Jérôme Tchoufack, 4800 Verviers (BE); MERTENS, Anne, 4053 Embourg (BE)
(74) Representative: Winger

(57) **Abstract**

The present invention relates to a process for producing a steel alloy part, which includes providing a steel alloy powder mixture containing SiC, forming the part from the powder mixture using an additive manufacturing technique, and subjecting the formed part to a thermal treatment for a duration of 1 to 150 minutes at a temperature ranging from 600°C to 750°C. This process is particularly suitable for creating parts with enhanced properties, such as cutting tools, bearings, punches, and gears, which can be crack-free and defect-free. The additive manufacturing technique can be further specified in various embodiments to include Laser Powder Bed Fusion with particular laser parameters and scan strategies. The steel alloy powder mixture composition and preparation method are also detailed, along with the characteristics of the resulting steel alloy part, which comprises a bainitic ferrite matrix with graphite particles and carbides distributed therein.

## Description

### Field of the Invention

The present invention relates to the field of metallurgy and materials science, specifically to the development of steel alloys for manufacturing applications.

### Background of the Invention

In industry, the manufacturing of parts (metal, ceramic, plastic, wood) through operations such as cutting, forming, stamping, shearing, punching, drawing and others involves the use of a tool as working part. During the manufacturing operation, the continuous interaction between tool and workpiece and friction lead to the wear of the tool. The result might be the breakage of the tool and its substitution, negatively affecting the economic aspect as well as the energy consumption of the manufacturing operation. To reduce and minimize both friction and tool wear, in order to increase the tool life, the use of an external lubricant (natural or synthetic oils, water, grease, graphite, boron-nitride) is needed. The selection of the best lubricant is often a challenge for the industry, as it depends on the material properties of both tool and workpiece on the one hand, and on the operating conditions on the other hand. Moreover, the use of lubricants represents a problem for human health and the environment due to the presence of contaminants. Therefore, there is a need for self-lubricating materials. Self-lubricating materials may incorporate solid-lubricating compounds (e.g. CaF₂, MoS₂, h-BN and graphite) that will be released gradually during service to minimize friction and wear over a wide range of temperatures.

One class of material often used in tool production is steel, thanks to its high hardness and intrinsic wear resistance. Self-lubricating properties of steel are usually obtained through deposition of a coating with self-lubricating properties by laser cladding. For example, in CN114774912A, Wang Cheng et al. describe a laser cladding process wherein the starting materials (stainless steel powder, pure titanium powder, graphite powder, hexagonal boron nitride (h-BN) powder) react to form a wear resistant coating on a forging mold H13 steel. This is due to the fact that h-BN partially decomposes into B and N during the laser cladding process, in which N reacts with Ti to form TiN, C reacts with Cr in the stainless steel powder to form Cr₃C₂, and C combines with Ti to form TiC. Such phases, together with the residues of graphite and hexagonal boron nitride, play the role of self-lubrication in laser cladding coatings. However, in such process, the material itself (substrate) is not self-lubricating and the presence of a coating may induce other problems such as a lack of cohesion and/or the reduction of hardness and/or the reduction of wear resistance.

Selective Laser Melting also known as Laser Powder Bed Fusion (LPBF) is a technique of additive manufacturing which allows producing complex shapes. However, because of their complex chemical composition and due to the high cooling rates achieved during additive manufacturing, steel alloys processed by LPBF may exhibit defects within the final printed part. Although the use of LPBF to prepare matrices with reinforcement has attracted some attention, the development of new alloys or composites by LPBF is still limited, due to the lack of raw material (in form of powder) available in the market, together with the high cost and difficulties in obtaining satisfying printed parts.

Therefore, there is still a need to develop a process that alleviates one or more of above problems to obtain self-lubricating materials having a good hardness and being wear resistant.

### Summary of the Invention

It is an object of embodiments of the present invention to provide steel alloy parts with good wear resistance and self-lubricating properties. This objective is accomplished by a process for producing a steel alloy part according to the invention.

In the first aspect, the present invention relates to a process for producing a steel alloy part comprising providing a steel alloy powder mixture comprising SiC, forming a part from said powder mixture by an additive manufacturing technique, and subjecting the formed part to a thermal treatment for 1 to 150 minutes at a temperature of from 600°C to 750°C.

In embodiments, the additive manufacturing technique may be Laser Powder Bed Fusion.

In embodiments, the additive manufacturing technique may be Laser Powder Bed Fusion with a laser power of from 150 to 250 W, preferably from 190 to 200 W.

In embodiments, the additive manufacturing technique may be Laser Powder Bed Fusion with a laser scan speed of from 500 to 900 mm/s, preferably from 600 to 750 mm/s.

In embodiments, the additive manufacturing technique may be Laser Powder Bed Fusion with a laser beam diameter of from 60 to 100 µm, preferably from 70 to 90 µm.

In embodiments, the additive manufacturing technique may be Laser Powder Bed Fusion with a hatch distance of from 60 to 100 µm, preferably from 70 to 90 µm.

In embodiments, the additive manufacturing technique may be Laser Powder Bed Fusion with a layer thickness of from 20 to 40 µm, preferably from 25 to 35 µm.

In embodiments, the additive manufacturing technique may be Laser Powder Bed Fusion with a scan strategy of 90° rotation between each layer.

In embodiments, the additive manufacturing technique may be Laser Powder Bed Fusion with a recoater speed of from 30 to 70 mm/s, preferably from 40 to 60 mm/s.

In embodiments, the SiC may be present in the steel alloy powder mixture in an amount ranging from 5 to 15% by volume.

In embodiments, the thermal treatment may be performed for 30 to 120 minutes, preferably from 60 to 90 minutes.

In embodiments, the thermal treatment temperature may be from 650°C to 720°C, preferably from 665°C to 705°C.

In embodiments, the steel alloy powder mixture may consist of from 0.40 to 0.55 wt% C, from 0.90 to 2.50 wt% Si, from 0 to 0.50 wt% V, from 0 to 1.5 wt% Cr, from 0.30 to 1.50 wt% Mn, from 0 to 0.30% Ni, from 0.30 to 0.60 wt% Mo, from 0 to 0.50 wt% of elements other than C, Si, V, Cr, Mn, Ni, Mo, and Fe, and the balance of Fe.

In embodiments, the steel alloy powder mixture may consist of from 0.40 to 0.55 wt% C, from 0.90 to 1.20 wt% Si, from 0 to 0.50 wt% V, from 0 to 0.10 wt% Cr (e.g., 0.0 wt%), from 0.30 to 0.50 wt% Mn, from 0 to 0.30% Ni, from 0.30 to 0.60 wt% Mo, at most 0.50 wt% of elements other than C, Si, V, Cr, Mn, Ni, Mo, and Fe, and the balance of Fe.

In embodiments, the Laser Powder Bed Fusion may be performed with a substrate preheating temperature of from 300 to 700°C, preferably from 400 to 600°C, more preferably from 450 to 550°C.

In embodiments, the steel alloy powder mixture may be prepared by a method comprising first sieving, followed by dry mixing, followed by ball milling, followed by a final sieving step.

In embodiments, the steel alloy powder mixture may be prepared by a method comprising first sieving with a test sieve of 45 to 55 µm, followed by dry mixing, followed by a 20 to 90 minutes ball milling with a Ball to Powder Ratio of 1:3 to 1:5, a rotational speed of from 50 to 200 RPM, followed by a final sieving step with a test sieve of 60 to 65 µm.

In the second aspect, the present invention relates to a steel alloy part comprising a bainitic ferrite matrix with graphite particles and one or more carbides distributed therein, wherein the graphite particles cover an area fraction of from 0.5 to 5%.

In embodiments, the graphite particles may cover an area fraction of from 0.9 to 3.8%.

In embodiments, the graphite particles may have a micrometric size of from 1 µm to 10 µm, preferably from 2 to 5 µm.

In embodiments, a majority of the graphite particles may have an aspect ratio width/height of from 0.8 to 1.2.

In embodiments, 90% of the graphite particles may fall within 10% of the mean diameter.

In embodiments, the steel alloy part may consist of from 1.2 to 1.8 wt% C, from 3.5 to 5.0 wt% Si, from 0.2 to 0.8 wt% Mo, from 0.2 to 0.8 wt% Mn, at most 0.2 wt% of other elements than C, Si, Mo, Mn, and Fe, and the balance of Fe.

In embodiments, the steel alloy part may consist of from 1.4 to 1.6 wt% C, from 4.0 to 4.5 wt% Si, from 0.3 to 0.7 wt% Mo, from 0.3 to 0.7 wt% Mn, at most 0.2 wt% of other elements than C, Si, Mo, Mn, and Fe, and the balance of Fe.

In embodiments, the steel alloy part may consist of from 1.43 to 1.53 wt% C, from 4.22 to 4.32 wt% Si, from 0.44 to 0.54 wt% Mo, from 0.40 to 0.50 wt% Mn, at most 0.2 wt% of other elements than C, Si, Mo, Mn, and Fe, and the balance of Fe.

In embodiments, the matrix may be a bainitic ferrite with a grain size within the range 0.5-3µm.

In embodiments, more than 50% of the one or more carbides may be distributed within interdendritic spaces.

In embodiments, graphite particles and the one or more carbides may be uniformly distributed within the bainitic ferrite matrix.

In embodiments, the part may have a Vickers hardness of at least 300 HV5, preferably at least 350 HV5.

In embodiments, the part may have a Vickers hardness ranging from 300 to 500 HV5, preferably from 350 to 465 HV5.

In embodiments, the graphite particles may have a morphology classified as type II based on ASTM A247 and/or as type V based on EN ISO 945.

In embodiments, the steel alloy part may be selected from cutting tools, bearings, punches, and gears.

In embodiments, the steel alloy part may be crack-free.

In embodiments, the steel alloy part may be defect-free.

In embodiments, the steel alloy part may be obtainable by the process of any one of the first aspect claims.

It is an advantage of embodiments of the present invention that a steel alloy part can be produced with a bainitic ferrite matrix that includes distributed graphite particles and carbides, which cover an area fraction conducive to self-lubricating properties.

It is a further advantage of embodiments of the present invention that the graphite particles within the steel alloy part have a micrometric size that is optimal for enhancing wear resistance while maintaining a desirable hardness level.

It is an additional advantage of embodiments of the present invention that the steel alloy part can be produced using an additive manufacturing technique such as Laser Powder Bed Fusion, which allows for the creation of complex shapes and geometries that may not be possible with traditional manufacturing methods.

It is also an advantage of embodiments of the present invention that the steel alloy part may be suitable for applications such as cutting tools, bearings, punches, and gears.

It is a further advantage of embodiments of the present invention that the steel alloy part can be obtained crack-free and defect-free, ensuring the integrity and performance of the part in its intended applications.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference Figures quoted below refer to the attached drawings.

### Brief description of the drawings

Fig.1 is a flow chart of the process for producing a steel alloy part according to embodiments of the present invention.
Fig.2 is a scanning electron microscope (SEM) image of the powder mixture S2 + 10% SiC after preparation and before thermal treatment according to embodiments of the present invention.
Fig.3 is a scanning electron microscope (SEM) image of the microstructure of the alloy after processing with LPBF and post thermal treatment at 680°C for 30 minutes according to embodiments of the present invention.
Fig.4 is a scanning electron microscope (SEM) image of the microstructure of the alloy after processing with LPBF and post thermal treatment at 680°C for 60 minutes according to embodiments of the present invention.
Fig.5 is a scanning electron microscope (SEM) image of the microstructure of the alloy after processing with LPBF without post thermal treatment in a comparative example.
Fig.6 is an optical microscope (OM) image of the microstructure of the alloy after processing with LPBF and post thermal treatment at 680°C for 180 minutes according to a comparative example.
Fig.7 is a scanning electron microscope (SEM) image of the microstructure of the alloy after processing with LPBF and post thermal treatment at 800°C for 90 minutes according to a comparative example.
Fig.8 is a graph showing the coefficient of friction recorded during the pin-on-disc test of different samples according to embodiments of the present invention and according to the prior art.
Fig.9 is a graph showing the worn volumes of different samples measured using an optical profilometer after a pin-on-disc test according to embodiments of the present invention and according to the prior art.

In the different Figures, the same reference signs refer to the same or analogous elements.

### Detailed description of Illustrative Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, Fig., or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "steel alloy powder mixture" refers to a blend of metallic powders that, when combined, are capable of forming a steel alloy upon melting and solidification. This mixture includes powders of iron (Fe) and various alloying elements such as carbon (C), silicon (Si), vanadium (V), chromium (Cr), manganese (Mn), nickel (Ni), molybdenum (Mo), and potentially small quantities of other elements. Specific embodiments of this term include mixtures with compositions ranging from 0.40 to 0.55 wt% C, from 0.90 to 2.50 wt% Si, from 0 to 0.50 wt% V, from 0 to 1.5 wt% Cr, from 0.30 to 1.50 wt% Mn, from 0 to 0.30% Ni, from 0.30 to 0.60 wt% Mo, from 0 to 0.50 wt% of elements other than the ones listed above, and the balance being Fe.

As used herein, and unless otherwise specified, the term "additive manufacturing technique" refers to a process of joining materials to make objects from 3D model data, usually layer upon layer, as opposed to subtractive manufacturing methodologies. Specific embodiments of this term include Laser Powder Bed Fusion (LPBF), which involves spreading a layer of powder and selectively melting it with a laser to build a part layer by layer. The LPBF may be further specified by parameters such as laser power (e.g., 150 to 250 W), laser scan speed (e.g., 500 to 900 mm/s), laser beam diameter (e.g., 60 to 100 µm), hatch distance (e.g., 60 to 100 µm), layer thickness (e.g., 20 to 40 µm), scan strategy (e.g., 90° rotation between each layer), and recoater speed (e.g., 30 to 70 mm/s).

As used herein, and unless otherwise specified, the term "thermal treatment" refers to a controlled heating process applied to the formed part to alter its microstructure and properties. This process involves heating the part to a specified temperature range (600°C to 750°C) for a duration ranging from 1 to 150 minutes. Specific embodiments of this term include thermal treatments performed for 30 to 120 minutes, preferably from 60 to 90 minutes, and at temperatures from 650°C to 720°C, preferably from 665°C to 705°C.

As used herein, and unless otherwise specified, the term "SiC" refers to silicon carbide, a compound of silicon and carbon that is known for its hardness and thermal conductivity. In the context of the steel alloy powder mixture, SiC may for instance be present in an amount ranging from 5 to 15% by volume.

As used herein, and unless otherwise specified, the term "substrate preheating temperature" refers to the temperature at which the build platform or substrate is preheated before the additive manufacturing process begins. This preheating is intended to minimize thermal gradients during the building process, which can reduce residual stresses and improve part quality. Specific embodiments of this term include preheating temperatures ranging from 300 to 700°C, preferably from 400 to 600°C, more preferably from 450 to 550°C.

As used herein, and unless otherwise specified, the term "bainitic ferrite matrix" refers to a microstructure within a steel alloy part where bainite, a phase composed of ferrite and cementite, is the predominant phase. The bainitic ferrite matrix provides a combination of strength and toughness to the steel alloy part. Specific embodiments of this term include a bainitic ferrite matrix with a grain size within the range of 0.5-3µm.

As used herein, and unless otherwise specified, the term "graphite particles" refers to particles of graphite, a crystalline form of carbon, which are distributed within the steel alloy matrix. These particles can influence the mechanical properties of the steel alloy part, such as its wear resistance and lubricity. Specific embodiments of this term include graphite particles covering an area fraction of from 0.5 to 5%, with micrometric sizes ranging from 1 µm to 10 µm, and having an aspect ratio width/height of from 0.8 to 1.2.

As used herein, and unless otherwise specified, the term "Vickers hardness" refers to a measure of the hardness of a material, determined by pressing a diamond pyramid indenter into the surface of the material and measuring the size of the indentation. The term "HV5" specifies a Vickers hardness test with a 5 kg load. Specific embodiments of this term include a Vickers hardness for the part of at least 300 HV5, with ranges from 300 to 500 HV5, preferably from 350 to 465 HV5.

As used herein, and unless otherwise specified, the term "morphology classified as type II based on ASTM A247 and/or as type V based on EN ISO 945" refers to the shape and distribution characteristics of graphite particles within a steel alloy matrix as defined by these standard classifications. Type II morphology indicates a generally rounded form of graphite particles.

As used herein, and unless otherwise specified, the term "being selected from cutting tools, bearings, punches, and gears" refers to the intended use or application of the steel alloy part, which is specifically designed and suitable for use as components such as cutting tools, bearings, punches, and gears due to their mechanical properties and wear resistance.

As used herein, and unless otherwise specified, the term "crack-free" refers to the absence of cracks in the steel alloy part, which is indicative of a high-quality part with good structural integrity. The term "defect-free" encompasses a broader range of imperfections, including but not limited to cracks, porosity, and other inclusions, indicating that the part is free from any such manufacturing defects.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In the first aspect, the present invention relates to a process for producing a steel alloy part (1), comprising: providing a steel alloy powder mixture comprising SiC, forming a part (1) from said powder mixture by an additive manufacturing technique, and subjecting the formed part (1) to a thermal treatment for 1 to 150 minutes at a temperature of from 600°C to 750°C.

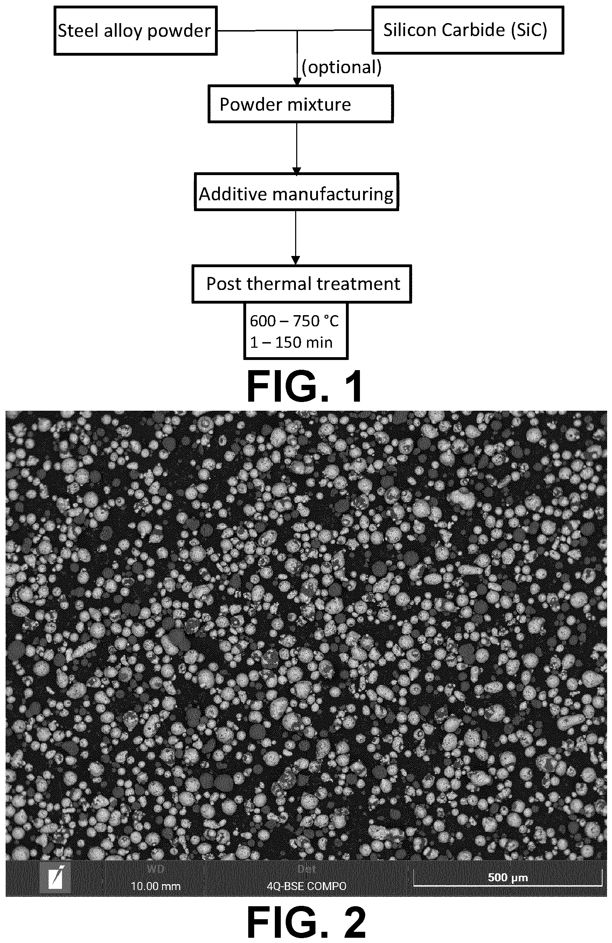

We now refer to Fig. 1, which shows a flow chart of the process for producing a steel alloy part (1) according to embodiments of the present invention. The process comprises providing a steel alloy powder mixture comprising SiC, forming a part (1) from said powder mixture by an additive manufacturing technique such as laser powder bed fusion (LPBF), and subjecting the formed part (1) to a thermal treatment for 1 to 150 minutes at a temperature of from 600°C to 750°C.

In embodiments, the additive manufacturing technique may be Laser Powder Bed Fusion. Using Laser Powder Bed Fusion enables the production of complex-shaped parts (1).

In embodiments, the additive manufacturing technique may be Laser Powder Bed Fusion with a laser power of from 150 to 250 W, preferably from 190 to 200 W. This laser power range is advantageous for obtaining optimal melting and densification of the powder mixture.

In embodiments, the additive manufacturing technique may be Laser Powder Bed Fusion with a laser scan speed of from 500 to 900 mm/s, preferably from 600 to 750 mm/s. This scan speed range balances melting and cooling rates, which is advantageous for proper microstructure development.

In embodiments, the additive manufacturing technique may be Laser Powder Bed Fusion with a laser beam diameter of from 60 to 100 µm, preferably from 70 to 90 µm. This beam diameter range provides a fine resolution for intricate part (1) details.

In embodiments, the additive manufacturing technique may be Laser Powder Bed Fusion with a hatch distance of from 60 to 100 µm, preferably from 70 to 90 µm. This hatch distance ensures proper overlap between laser scans, which is advantageous for obtaining a fully dense part (1).

In embodiments, the additive manufacturing technique may be Laser Powder Bed Fusion with a layer thickness of from 20 to 40 µm, preferably from 25 to 35 µm. This thin layer thickness enables fine feature resolution in the built part (1).

In embodiments, the additive manufacturing technique may be Laser Powder Bed Fusion with a scan strategy of 90° rotation between each layer. The 90° rotation is advantageous as it minimizes anisotropy in mechanical properties of the part (1).

In embodiments, the additive manufacturing technique may be Laser Powder Bed Fusion with a recoater speed of from 30 to 70 mm/s, preferably from 40 to 60 mm/s. This recoater speed range is advantageous as it provides uniform powder spreading for each layer.

In embodiments, the SiC may be present in the steel alloy powder mixture in an amount ranging from 5 to 15% by volume. This SiC content range is advantageous as it promotes in-situ graphite (3) formation without being detrimental to mechanical properties.

In embodiments, the steel alloy powder mixture may consist of from 0.40 to 0.55 wt% C, from 0.90 to 2.50 wt% Si, from 0 to 0.50 wt% V, from 0 to 1.5 wt% Cr, from 0.30 to 1.50 wt% Mn, from 0 to 0.30% Ni, from 0.30 to 0.60 wt% Mo, from 0 to 0.50 wt% of elements other than C, Si, V, Cr, Mn, Ni, Mo, and Fe, and the balance of Fe. This composition is advantageous as it promotes graphite (3) formation while providing a hard, wear-resistant matrix (2).

In embodiments, the steel alloy powder mixture may consist of from 0.40 to 0.55 wt% C, from 0.90 to 1.20 wt% Si, from 0 to 0.50 wt% V, from 0 to 0.10 wt% Cr (e.g., 0.0 wt%), from 0.30 to 0.50 wt% Mn, from 0 to 0.30% Ni, from 0.30 to 0.60 wt% Mo, at most 0.50 wt% of elements other than C, Si, V, Cr, Mn, Ni, Mo, and Fe, and the balance of Fe. This narrower composition range is optimized for graphite (3) formation and matrix (2) properties.

We now refer to Fig. 2, which shows a scanning electron microscope (SEM) micrograph of the S2 + 10% SiC powder mixture after preparation according to embodiments of the present invention. Bright particles are AlSl S2 steel alloy powders and dark particles are SiC granules. The steel alloy powder mixture may be prepared by a method comprising first sieving, followed by dry mixing, followed by ball milling, followed by a final sieving step. This preparation method ensures a homogeneous powder mixture with good flowability.

In embodiments, the steel alloy powder mixture may be prepared by a method comprising first sieving with a test sieve of 45 to 55 µm, followed by dry mixing, followed by a 20 to 90 minutes ball milling with a Ball to Powder Ratio of 1:3 to 1:5, a rotational speed of from 50 to 200 RPM, followed by a final sieving step with a test sieve of 60 to 65 µm. This specific preparation method provides optimal powder particle size and mixing.

In embodiments, the thermal treatment may be performed for 30 to 120 minutes, preferably from 60 to 90 minutes. This treatment time range allows for improved graphite (3) precipitation while maintaining high hardness.

In embodiments, the thermal treatment temperature may be from 650°C to 720°C, preferably from 665°C to 705°C. This temperature range optimizes the graphite (3) formation while avoiding excessive softening of the matrix (2).

In embodiments, the Laser Powder Bed Fusion may be performed with a substrate preheating temperature of from 300 to 700°C, preferably from 400 to 600°C, more preferably from 450 to 550°C. Substrate preheating in this range reduces thermal gradients and residual stresses in the part (1).

In the second aspect, the present invention relates to a steel alloy part (1) comprising a bainitic ferrite matrix (2) with graphite particles (3) and one or more carbides distributed therein, wherein the graphite particles (3) cover an area fraction of from 0.5 to 5%.

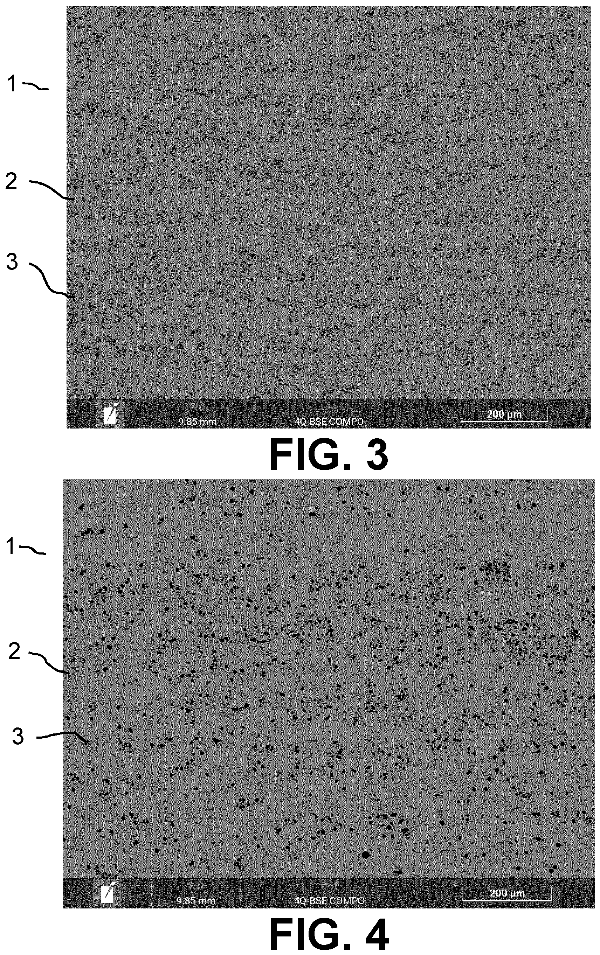

We now refer to Fig. 3, which shows a scanning electron microscope (SEM) micrograph of the microstructure of the steel alloy part (1) after LPBF processing and post thermal treatment at 680°C for 30 minutes according to embodiments of the present invention. The microstructure comprises a bainitic ferrite matrix (2) with graphite particles (3) appearing as black spheroids and one or more carbides distributed within the matrix (2). The graphite particles (3) cover an area fraction of 0.9%.

We now refer to Fig. 4, which shows a scanning electron microscope (SEM) micrograph of the microstructure of the steel alloy part (1) after LPBF processing and post thermal treatment at 680°C for 60 minutes according to embodiments of the present invention. The microstructure comprises a bainitic ferrite matrix (2) with graphite particles (3) appearing as black spheroids and one or more carbides distributed within the matrix (2). The graphite particles (3) cover an increased area fraction of 2.7% compared to the 30 minute thermal treatment.

In embodiments, the graphite particles (3) may cover an area fraction of from 0.9 to 3.8%. This graphite (3) area fraction range provides optimal self-lubricating properties.

In embodiments, the graphite particles (3) may have a micrometric size of from 1 µm to 10 µm, preferably from 2 to 5 µm. This graphite (3) size range improves lubrication while maintaining good mechanical properties.

In embodiments, a majority of the graphite particles (3) may have an aspect ratio width/height of from 0.8 to 1.2. This near-spherical morphology enhances the self-lubricating effect.

In embodiments, 90% of the graphite particles (3) may fall within 10% of the mean diameter. This narrow size distribution promotes uniform properties throughout the part (1).

In embodiments, the steel alloy part (1) may consist of from 1.2 to 1.8 wt% C, from 3.5 to 5.0 wt% Si, from 0.2 to 0.8 wt% Mo, from 0.2 to 0.8 wt% Mn, at most 0.2 wt% of other elements than C, Si, Mo, Mn, and Fe, and the balance of Fe. This composition provides an optimal balance of graphite (3) formation and matrix (2) strength.

In embodiments, the steel alloy part (1) may consist of from 1.4 to 1.6 wt% C, from 4.0 to 4.5 wt% Si, from 0.3 to 0.7 wt% Mo, from 0.3 to 0.7 wt% Mn, at most 0.2 wt% of other elements than C, Si, Mo, Mn, and Fe, and the balance of Fe. This narrower composition range is fine-tuned for the desired microstructure and properties.

In embodiments, the steel alloy part (1) may consist of from 1.43 to 1.53 wt% C, from 4.22 to 4.32 wt% Si, from 0.44 to 0.54 wt% Mo, from 0.40 to 0.50 wt% Mn, at most 0.2 wt% of other elements than C, Si, Mo, Mn, and Fe, and the balance of Fe. This specific composition has been experimentally optimized for the process.

In embodiments, the matrix (2) may be a bainitic ferrite with a grain size within the range 0.5-3µm. This fine bainitic matrix (2) provides high strength and hardness.

In embodiments, more than 50% of the one or more carbides may be distributed within interdendritic spaces. This carbide distribution enhances wear resistance.

In embodiments, graphite particles (3) and the one or more carbides may be uniformly distributed within the bainitic ferrite matrix (2). The uniform distribution promotes isotropic properties.

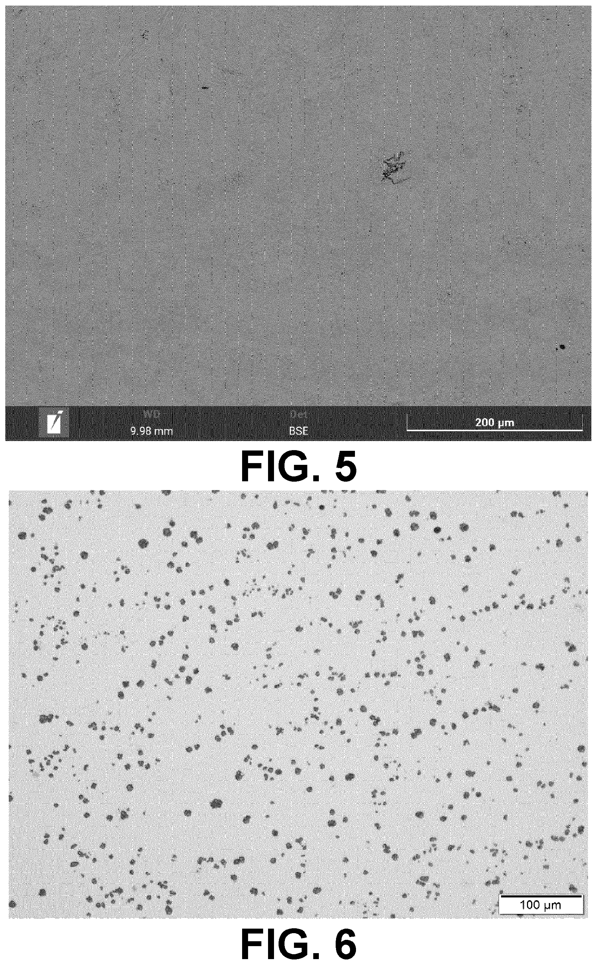

We now refer to Fig. 5, which shows a scanning electron microscope (SEM) micrograph of the microstructure of the steel alloy part (1) after LPBF processing without any post thermal treatment according to the present invention. The microstructure comprises a bainitic ferrite matrix (2) with one or more carbides distributed within the matrix (2), but no graphite particles (3) are present. This demonstrates the post thermal treatment is essential for forming the graphite particles (3) in-situ.

In embodiments, the part (1) may have a Vickers hardness of at least 300 HV5, preferably at least 350 HV5. This high hardness improves wear resistance.

In embodiments, the part (1) may have a Vickers hardness ranging from 300 to 500 HV5, preferably from 350 to 465 HV5. This hardness range provides an optimal balance of strength and toughness.

We now refer to Fig. 6, which shows an optical microscope (OM) micrograph of the microstructure of the steel alloy part (1) after LPBF processing and an extended post thermal treatment at 680°C for 180 minutes, unlike embodiments of the present invention. The microstructure comprises graphite particles (3) covering an increased area fraction of 5.3%. However, the extended thermal treatment time results in an undesirably low hardness of 280 HV5.

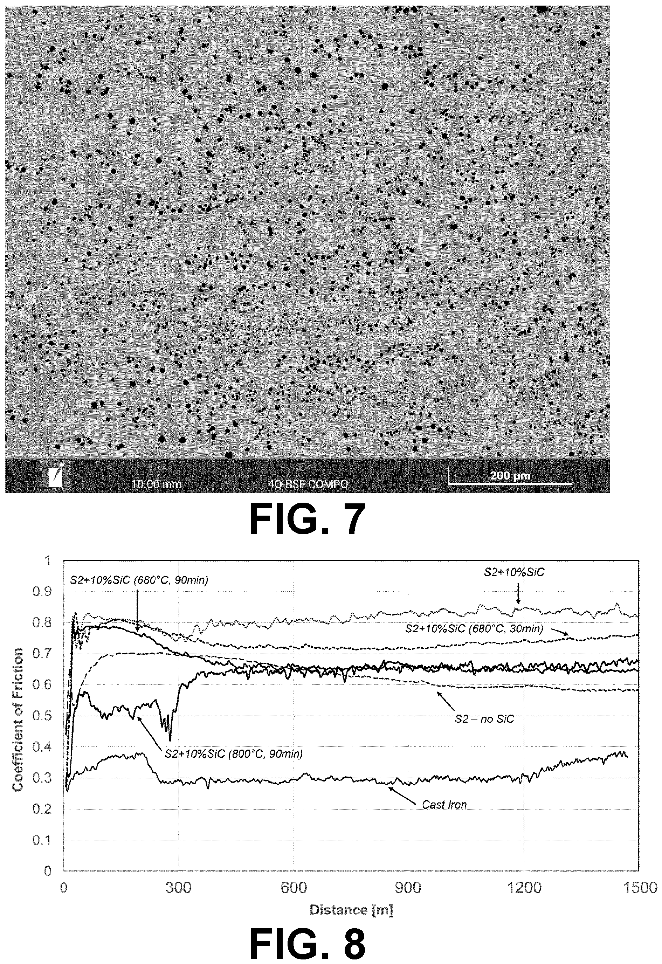

We now refer to Fig. 7, which shows a scanning electron microscope (SEM) micrograph of the microstructure of the steel alloy part (1) after LPBF processing and a post thermal treatment at an elevated temperature of 800°C for 90 minutes unlike embodiments of the present invention. The microstructure comprises an undesired ferrite matrix (2) with graphite particles (3) covering 3.7% of the area. The high temperature results in an undesirably low hardness of 240 HV5. This demonstrates the importance of staying within the claimed thermal treatment temperature range.

In embodiments, the graphite particles (3) may have a morphology classified as type II based on ASTM A247 and/or as type V based on EN ISO 945. This spheroidal morphology enhances self-lubrication.

In embodiments, the steel alloy part (1) may be selected from cutting tools, bearings, punches, and gears. These are applications where the self-lubricating and wear-resistant properties are advantageous.

In embodiments, the steel alloy part (1) may be crack-free. The absence of cracks improves mechanical properties and part (1) lifetime.

In embodiments, the steel alloy part (1) may be defect-free. Typically, neither cracks nor porosity defects are present. The absence of defects ensures high quality and reliability of the part (1).

In embodiments, the steel alloy part (1) may be obtainable by the process of any one of the embodiments of the first aspect. This process enables the unique microstructure and properties of the part (1).

We now refer to Fig. 8, which shows a graph of the coefficient of friction recorded during pin-on-disc testing of various steel alloy part (1) samples according to embodiments of the present invention or to comparative examples. The sample that underwent LPBF processing and a post thermal treatment at 680°C for 90 minutes exhibits the lowest coefficient of friction of 0.65, demonstrating its improved self-lubricating properties.

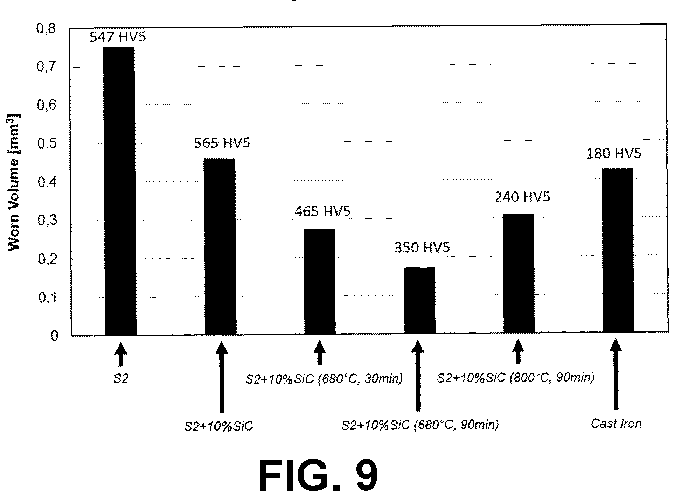

We now refer to Fig. 9, which shows a graph of the worn volumes measured after pin-on-disc testing of various steel alloy part (1) samples according to embodiments of the present invention or to comparative examples. The sample that underwent LPBF processing and a post thermal treatment at 680°C for 90 minutes exhibits the lowest worn volume of 0.173 mm^3, which is 2.5 times lower than the reference cast iron sample. This demonstrates the significantly enhanced wear resistance of the steel alloy parts (1) of the present invention.

### Examples:

Rough quantitative analysis for determining both the size and the distribution of phases has been carried out, together with the assessment of macroscopic properties (hardness) and wear resistance.

Quantitative metallography was carried out on micrographs having 660 x 510 µm sizes, under a light microscope (OLYMPUS BX60M) coupled with an OLYMPUS UC30 CCD digital camera and equipped with a motorized stage together with the OLYMPUS Stream Motion software.

Macro-hardness analysis was carried out using a universal EMCO M1C 010, under Vickers indentation with 5 kg load (HV5). 5 measures per sample were performed.

Wear properties were assessed with a CSM high-temperature pin-on-disc tribometer, specimen being used against a 6 mm diameter Al2O3 counter-body, according to the standard test method ASTM G99-17. The average surface roughness of samples was 0.2 µm.

The other wear test parameters are as follows: a total sliding length of 1500 m, at 10 cm/s of sliding speed, with 10 N of load and in environmental dry conditions (25 °C). Two tests per sample were repeated. Coefficient of friction was recorded during the pin-on-disc test. Worn volume of the worn track were measured using an ALICONA Infinite Focus G5 optical profilometer with the ring-light option. Worn volume is an indication a wear resistance. The lower the worn volume, the better the wear resistance of the material.

The below examples describe a procedure to obtain an alloy with the properties that match the purpose of this invention. Subsequently, comparative examples of parts produced using preparation procedures without post thermal treatments or with different post thermal treatment are presented. Also for comparative purpose, a commercial material with self-lubricating properties is presented.

The comparative examples are related to procedures that do not match the purpose of this invention. The first comparative example is related to the processability by LPBF of the low alloy tool steel grade AlSl S2 without the enrichment in SiC. The second comparative example is related to the processability of S2 + 10% SiC by LPBF without post thermal treatment. The third comparative example is related to the processability of S2 + 10% SiC by LPBF and a post thermal treatment performed within the optimal range of temperature but outside the optimal time of the isothermal segment (holding time). The fourth comparative example is related to the processability of S2 + 10% SiC by LPBF and a post thermal treatment performed outside the optimal range of temperature. Finally, the fifth comparative example involves the use of a commercial EN-GJS-400-15 nodular cast iron sample (not processed with materials and devices described in this invention), well known for its self-lubricating properties, which is used as a reference to compare the worn volume after wear test with the other materials described in the examples.

The aim of examples 1, 2, 3 and the comparative examples is to show the enhanced wear properties of the new alloy considered in this invention. In particular, the addition of SiC and the post thermal treatment are essential for the improvement of the wear resistance (assessed based on the worn volume after wear test).

Prior to the description of the examples, materials and methods are reported. A schematic drawing of the method is shown in Fig. 1.

Powder materials described in this section are a low alloy S2 tool steel containing C, Si, Mo, Mn and Fe (the related mass ratio percentage is 0.49:1.20:0.60:0.60 and Fe for the balance) as the main powder, which is enriched with granules of silicon carbide (SiC) from 5 to 15% SiC (in volume). The mixing methodology (optional) involves the use of a planetary ball mill Pulverisette 6 (FRITSCH) in environmental conditions equipped with WC balls and vials. Manual mixing is performed within a beaker with a spoon. Sieving is carried out with Haver EML 200 Premium (HAVER & BOCKER) using test sieves with 63 and 50 µm of mesh size. Powder mixture is processed with an ACONITY3D Mini machine (LPBF technology). Post-process thermal treatment is performed using a conventional furnace, prior to final machining.

Example 1: Preparation and characterization of S2 + 10% SiC steel alloy part with post thermal treatment at 680°C for 30 minutes

Low alloy S2 tool steel powder was enriched with 10 vol% silicon carbide (SiC) granules. The powder mixture was prepared by first sieving the SiC powder with a 50 µm test sieve, followed by manual dry mixing with the S2 powder. The S2 + 10% SiC mixture was then ball milled using a ball-to-powder ratio of 1:4, rotational speed of 100 RPM, and milling time of 45 minutes. Finally, the milled powder was sieved using a 63 µm test sieve.

Fig. 2 shows a micrograph of the powder mixture S2 + 10% SiC after the preparation, taken under Scanning Electron Microscope (SEM) TESCAN Clara. Bright particles are AlSl S2 powders, dark particles are SiC granules.

The prepared S2 + 10% SiC powder mixture was processed using a laser powder bed fusion (LPBF) additive manufacturing machine with the following parameters: 200 W laser power, 700 mm/s laser scan speed, 80 µm laser beam diameter, 30 µm layer thickness, 80 µm hatch distance, 90° rotation scan strategy between layers, 500°C substrate preheating, powder feedstock supply factor of 4, and 50 mm/s recoater speed.

After LPBF processing, the printed part underwent a post-process graphitization thermal treatment at 680°C for 30 minutes. Fig. 3 shows a micrograph of the microstructure after the LPBF process and the post thermal treatment. Scanning electron microscopy (SEM) analysis of the final microstructure revealed a bainitic ferrite matrix with carbides distributed in the interdendritic spaces and graphite particles with an average diameter of 2.5 µm covering an area fraction of 0.9%. The graphite morphology was classified as type II per ASTM A247 and type V per EN ISO 945 standards. The average Vickers hardness was measured as 465 HV5.

Pin-on-disc wear testing showed an average coefficient of friction of 0.75 (Fig. 8) and worn volume of 0.274 mm³ (Fig. 9). Compared to the sample without thermal treatment, the coefficient of friction was lower (0.81 without treatment) and the worn volume was 1.7 times less. The worn volume was also 1.1 times lower than that of a reference cast iron material known for its self-lubricating properties.

Example 2: Preparation and characterization of S2 + 10% SiC steel alloy part with post thermal treatment at 680°C for 60 minutes

An S2 + 10% SiC steel alloy part was prepared using the same procedure and LPBF parameters as Example 1, but with the post-process graphitization thermal treatment conducted at 680°C for 60 minutes.

Fig. 4 shows a micrograph of the microstructure after the LPBF process and the post thermal treatment of 60 minutes.

SEM characterization of the microstructure showed a bainitic ferrite matrix, interdendritic carbides, and graphite particles with 4.5 µm average diameter and 2.7% area fraction. The graphite particles exhibited a type II morphology per ASTM A247 and type V per EN ISO 945. An average hardness of 430 HV5 was measured.

Example 3: Preparation and characterization of S2 + 10% SiC steel alloy part with post thermal treatment at 680°C for 90 minutes

An S2 + 10% SiC steel alloy part was prepared following the same methodology as Example 1, but applying the post-process graphitization thermal treatment at 680°C for 90 minutes.

The final microstructure consisted of a bainitic ferrite matrix with a 0.5-3 µm grain size, interdendritic carbides, and graphite particles. The graphite had an average diameter of 2.2 µm, covered 3.8% area fraction, and was classified as type II per ASTM A247 and type V per EN ISO 945 morphology standards. The average hardness was 350 HV5.

Pin-on-disc testing revealed an average coefficient of friction of 0.65 (Fig. 8)and worn volume of 0.173 mm³ (Fig. 9). Based on Fig. 8, the thermal treatment significantly reduced the coefficient of friction compared to the untreated sample (0.81). Additionally, the worn volume was the lowest among all samples, being 2.5 times less than the reference cast iron.

### Comparative example 1: S2 + 0% SiC - processability by LPBF

Low alloy tool steel powder (grade AlSl S2) is processed within a LPBF machine with laser power of 200 W, laser scan speed of 1000 mm/s, laser beam diameter of 80 µm, layer thickness of 30 µm, hatch distance of 80 µm, scan strategy of 90° rotation between each layer, supply factor of powder feedstock of 3, recoater speed of 50 mm/s.

The final microstructure of the alloy is composed of two main constituents: tempered martensite and bainite. The average hardness is 550 HV5. Such microstructure is not matching the purpose of the material described in this invention.

Pin-on-disc tests reveals a coefficient of friction of 0.63 (Figure 8) and a worn volume of 0.751 mm³ (Figure 9). Such worn volume is the highest among all.

### Comparative example 2: S2 + 10% SiC - powder preparation and processability by LPBF

Low alloy S2 tool steel powder is enriched with Silicon Carbide (SiC) in 10% in volume and prepared as described in Example 1. No thermal treatment was performed.

Figure 5 shows a micrograph of the microstructure after the LPBF process without post thermal treatment. The final microstructure of the alloy is composed of two main constituents: matrix and carbides. Matrix consists of bainitic ferrite with a grain size within the range 0.5 - 3 µm. Carbides are mostly distributed within the interdendritic spaces. No graphite spheroids are present. Dark spots are imperfections formed during metallographic preparation of the sample. The average hardness is 560 HV5. Such microstructure is not matching the purpose of the material described in this invention.

Pin-on-disc tests reveals a Coefficient of Friction of 0.80 (Figure 8) and a worn volume of 0.459 mm³ (Figure 9).

Comparative example 3: S2 + 10% SiC - powder preparation, processability by LPBF and post thermal treatment at 680 °C for 180 minutes.

The sample was prepared with the same conditions as Example 1, except that a post-process graphitization thermal treatment is performed at 680°C for 180 minutes.

Figure 6 shows a micrograph of the microstructure after the LPBF process and the post thermal treatment, taken under Optical Microscope (OM) Olympus BX60M. The final microstructure of the alloy is composed of three main constituents: matrix, carbides and graphite. Matrix consists of bainitic ferrite. Carbides are mostly distributed within the interdendritic spaces. Graphite particles having an average diameter of 4.5 µm cover an area fraction of 5.3%. The morphology of graphite particles is classified as type II based on ASTM A247 and as type V based on EN ISO 945. The average hardness is 280 HV5. Such low hardness is not matching the purpose of the material described in this invention.

Comparative example 4: S2 + 10% SiC - powder preparation, processability by LPBF and post thermal treatment at 800 °C for 90 minutes.

The sample was prepared with the same conditions as Example 1, except that a post-process graphitization thermal treatment is performed at 800°C for 90 minutes.

Figure 7 shows a micrograph of the microstructure after the LPBF process and the post thermal treatment. The final microstructure of the alloy is composed of two main constituents: matrix and graphite. Matrix consists of ferrite. Graphite particles having an average diameter of 3.2 µm cover an area fraction of 3.7%. The morphology of graphite particles is classified as type II based on ASTM A247 and as type V based on EN ISO 945. The average hardness is 240 HV5. Such low hardness and microstructure are not matching the purpose of the material described in this invention.

Pin-on-disc tests reveals an average coefficient of friction of 0.62 (Figure 8) and a worn volume of range 0.310 mm³ (Figure 9).

### Comparative example 5: EN-GJS-400-15 Nodular Cast Iron

A sample made of cast iron is used a reference material, in view of its intrinsic self-lubricating properties thanks to the presence of primary graphite nodules (up to 50 µm) within the microstructure. The average hardness is 180 HV5.

Pin-on-disc tests reveals an average coefficient of friction of 0.31 (Figure 8) and a worn volume of 0.427 mm³ (Figure 9).

The table below shows a summary of the results:

| Example | Matrix Compositi on | Carbides | Graphite Diameter (Nm) | Graphite Area Fraction (%) | Hardness (HV5) | Coefficient of Friction | Worn Volume (mm3) |
|---|---|---|---|---|---|---|---|
| 1: S2 + 10% SiC (30 min thermal treatment) | Bainitic Ferrite | Interdendritic Spaces | 2.5 | 0.9 | 465 | 0.75 | 0.274 |
| 2: S2 + 10% SiC (60 min thermal treatment) | Bainitic Ferrite | Interdendritic Spaces | 4.5 | 2.7 | 430 | N/A | N/A |
| 3: S2 + 10% SiC (90 min thermal treatment) | Bainitic Ferrite | Interdendritic Spaces | 2.2 | 3.8 | 350 | 0.65 | 0.173 |
| Comparative 1: S2 + 0% SiC (No thermal treatment) | Tempered Martensite and Bainite | N/A | N/A | N/A | 550 | 0.63 | 0.751 |
| Comparative 2: S2 + 10% SiC (No thermal treatment) | Bainitic Ferrite | Interdendritic Spaces | N/A | N/A | 560 | 0.80 | 0.459 |
| Comparative 3: S2 + 10% SiC (180 min thermal treatment) | Bainitic Ferrite | Interdendritic Spaces | 4.5 | 5.3 | 280 | N/A | N/A |
| Comparative 4: S2 + 10% SiC (800 °C for 90 min) | Ferrite | N/A | 3.2 | 3.7 | 240 | 0.62 | 0.310 |
| Comparative 5: EN-GJS-400-15 Cast Iron | N/A | N/A | Up to 50 (Nodules) | N/A | 180 | 0.31 | 0.427 |

The experimental results demonstrated the enhanced wear resistance and self-lubricating properties of the S2 + 10% SiC steel alloy parts produced by LPBF followed by post-process graphitization thermal treatments at 680°C for 30-90 minutes. The final microstructures consisted of a bainitic ferrite matrix, interdendritic carbides, and uniformly distributed graphite particles.

Key observations from the data include:
1. Increasing the thermal treatment time from 30 to 90 minutes led to a decrease in hardness from 465 to 350 HV5. However, all hardness values were suitable for wear-resistant applications.
2. The coefficient of friction decreased with increasing thermal treatment time, attributed to the formation of graphite particles acting as solid lubricants. The lowest coefficient of 0.65 was achieved after 90 minutes of treatment.
3. Worn volumes were significantly reduced in the thermally treated samples compared to the untreated one and the reference cast iron. The lowest worn volume of 0.173 mm³ was obtained after 90 minutes of treatment, indicating the best wear resistance.
4. The presence of a bainitic ferrite matrix, hard carbides, and graphite particles with optimal size and distribution contributed to the enhanced wear properties of the LPBF-processed and thermally treated S2 + 10% SiC steel alloy.

### Conclusions:

The experimental study demonstrated the successful production of wear-resistant and self-lubricating S2 + 10% SiC steel alloy parts using LPBF additive manufacturing followed by post-process graphitization thermal treatments. The optimal process conditions involved LPBF with 200 W laser power, 700 mm/s scan speed, 80 µm beam diameter, 30 µm layer thickness, 80 µm hatch distance, 90° rotation scan strategy, 500°C preheating, and 50 mm/s recoater speed, followed by thermal treatment at 680°C for 30-90 minutes.

The resulting microstructures featured a bainitic ferrite matrix, interdendritic carbides, and uniformly distributed graphite particles, leading to enhanced hardness, reduced coefficient of friction, and significantly improved wear resistance compared to untreated and reference materials. These findings highlight the potential of the developed LPBF-processed and thermally treated S2 + 10% SiC steel alloy for applications demanding high wear resistance and self-lubrication, such as cutting tools, bearings, punches, and gears.

### Further examples:

Example 4: Preparation and characterization of S2 + 5% SiC steel alloy part with post thermal treatment at 600°C for 1 minute

An S2 tool steel powder is mixed with 5 vol% silicon carbide (SiC) granules. The powder mixture is prepared by sieving the SiC powder with a 50 µm test sieve, followed by manual dry mixing with the S2 powder. The S2 + 5% SiC mixture is then ball milled using a ball-to-powder ratio of 1:4, rotational speed of 100 RPM, and milling time of 45 minutes. Finally, the milled powder is sieved using a 63 µm test sieve.

The prepared S2 + 5% SiC powder mixture is processed using a laser powder bed fusion (LPBF) additive manufacturing machine with the following parameters: 200 W laser power, 700 mm/s laser scan speed, 80 µm laser beam diameter, 30 µm layer thickness, 80 µm hatch distance, 90° rotation scan strategy between layers, 500°C substrate preheating, powder feedstock supply factor of 4, and 50 mm/s recoater speed.

After LPBF processing, the printed part undergoes a post-process graphitization thermal treatment at 600°C for 1 minute.

Example 5: Preparation and characterization of S2 + 15% SiC steel alloy part with post thermal treatment at 750°C for 150 minutes

An S2 tool steel powder is mixed with 15 vol% silicon carbide (SiC) granules. The powder mixture is prepared by sieving the SiC powder with a 50 µm test sieve, followed by manual dry mixing with the S2 powder. The S2 + 15% SiC mixture is then ball milled using a ball-to-powder ratio of 1:4, rotational speed of 100 RPM, and milling time of 45 minutes. Finally, the milled powder is sieved using a 63 µm test sieve.

The prepared S2 + 15% SiC powder mixture is processed using a laser powder bed fusion (LPBF) additive manufacturing machine with the following parameters: 200 W laser power, 700 mm/s laser scan speed, 80 µm laser beam diameter, 30 µm layer thickness, 80 µm hatch distance, 90° rotation scan strategy between layers, 500°C substrate preheating, powder feedstock supply factor of 4, and 50 mm/s recoater speed.

After LPBF processing, the printed part undergoes a post-process graphitization thermal treatment at 750°C for 150 minutes.

Example 6: Preparation of S6 + 5% SiC steel alloy part using directed energy deposition

An S6 tool steel powder enriched with 5 vol% silicon carbide (SiC) granules is prepared by sieving the SiC powder through a 75 µm test sieve and mixing it with the S6 powder using a tumbler mixer for 60 minutes. The powder mixture is then processed using a directed energy deposition (DED) additive manufacturing system equipped with a 1 kW fiber laser. The process parameters are set as follows: 800 W laser power, 10 mm/s deposition speed, 1.5 mm spot size, 0.5 mm layer thickness, 60% track overlap, and argon shielding gas at 10 L/min flow rate.

After DED processing, the as-built part undergoes a post-process graphitization thermal treatment at 650°C for 120 minutes in a vacuum furnace.

Example 7: Preparation of H13 + 15% SiC steel alloy part using binder jetting

A powder mixture comprising H13 tool steel and 15 vol% silicon carbide (SiC) granules is prepared by first sieving the SiC powder through a 25 µm test sieve, followed by mixing with the H13 powder in a planetary ball mill using a ball-to-powder ratio of 1:2, rotational speed of 200 RPM, and milling time of 30 minutes. The milled powder is then sieved using a 45 µm test sieve.

The H13 + 15% SiC powder mixture is processed using a binder jetting additive manufacturing system with the following parameters: 100 µm layer thickness, 60 µm binder droplet spacing, 65% powder packing density, and curing temperature of 200°C for 2 hours. After curing, the green part is sintered in a vacuum furnace at 1300°C for 3 hours, followed by a post-process graphitization thermal treatment at 720°C for 45 minutes.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A process for producing a steel alloy part (1), comprising:
- providing a steel alloy powder mixture comprising SiC,
- forming a part from said powder mixture by an additive manufacturing technique, and
- subjecting the formed part to a thermal treatment for 1 to 150 minutes at a temperature of from 600°C to 750°C.

2. The process according to claim 1, wherein the additive manufacturing technique is Laser Powder Bed Fusion.

3. The process according to any one of the preceding claims, wherein the SiC is present in the steel alloy powder mixture in an amount ranging from 5 to 15% by volume.

4. The process according to any one of the preceding claims, wherein the thermal treatment is performed for 30 to 120 minutes, preferably from 60 to 90 minutes.

5. The process according to any one of the preceding claims, wherein the thermal treatment temperature is from 650°C to 720°C, preferably from 665°C to 705°C.

6. The process according to any one of the preceding claims, wherein the steel alloy powder mixture consists of from 0.40 to 0.55 wt% C, from 0.90 to 2.50 wt% Si, from 0 to 0.50 wt% V, from 0 to 1.5 wt% Cr, from 0.30 to 1.50 wt% Mn, from 0 to 0.30% Ni, from 0.30 to 0.60 wt% Mo, from 0 to 0.50 wt% of elements other than C, Si, V, Cr, Mn, Ni, Mo, and Fe, and the balance of Fe.

7. The process according to any one of the preceding claims depending on claim 2, wherein the Laser Powder Bed Fusion is performed with a substrate preheating temperature of from 300 to 700°C, preferably from 400 to 600°C, more preferably from 450 to 550°C.

8. The process according to any one of the preceding claims, wherein the steel alloy powder mixture is prepared by a method comprising first sieving, followed by dry mixing, followed by ball milling, followed by a final sieving step.

9. A steel alloy part (1) comprising a bainitic ferrite matrix (2) with graphite particles (3) and one or more carbides distributed therein, wherein the graphite particles (3) cover an area fraction of from 0.5 to 5%..

10. The steel alloy part (1) according to claim 9, wherein the graphite particles (3) have a micrometric size of from 1 µm to 10 µm, preferably from 2 to 5 µm.

11. The steel alloy part (1) according to claim 9 or claim 10, wherein graphite particles (3) and the one or more carbide s are uniformly distributed within the bainitic ferrite matrix (2).

12. The steel alloy part (1) according to any one of claims 9 to 11, wherein the part has a Vickers hardness of at least 300 HV5, preferably at least 350 HV5.

13. The steel alloy part (1) according to any one of claims 9 to 12, wherein the graphite particles (3) have a morphology classified as type II based on ASTM A247 and as type V based on EN ISO 945.

14. The steel alloy part (1) according to any one of claims 9 to 13, wherein being selected from cutting tools, bearings, punches, and gears.

15. The steel alloy part (1) according to any one of claims 9 to 14, being crack-free.
